Europäisches Patentamt

European Patent Office

Office européen des brevets

(19)

(11) Publication number: **0 298 579**
A2

## (12) EUROPEAN PATENT APPLICATION

(21) Application number: 88201750.2

(22) Date of filing: 19.08.85

(51) Int. Cl.⁴: **B64C 25/60** , F16F 9/46

(43) Date of publication of application:
**11.01.89 Bulletin  89/02**

(60) Publication number of the earlier application in
accordance with Art.76 EPC: **0 212 022**

(84) Designated Contracting States:
**AT DE FR GB IT**

(71) Applicant: **Pneumo Abex Corporation**
**4800 Prudential Tower**
**Boston Massachusetts 01299(US)**

(72) Inventor: **Hrusch, Louis C.**
**13461 Green Street**
**Chesterfield Ohio 44026(US)**

(74) Representative: **Cook, Anthony John et al**
**D. YOUNG & CO. 10, Staple Inn**
**London, WC1V 7RD(GB)**

(54) **Landing gear mechanism for use on rough runways.**

(57) Landing gear mechanism includes a built-in hydraulic actuator (30) which may be actuated to provide a heavy load range, soft spring rate during take-off with a heavy take-off weight and a lower load range, softer spring rate after take-off and prior to landing with a lighter landing weight to yield more shock strut stroke for a given range of vertical load during landing. A special taxi valve (45) allows for some fluid to bypass the main orifice (15) more freely to and from the lower piston damping chamber (54) to the shock strut air-oil chamber (20) as soon as the landing energy stroke is complete to greatly reduce or eliminate high damping loads that might otherwise take place as the gear negotiates bumps. Such a valve may automatically be set to close for landing by the action of the gear extension during a subsequent take-off, thus reactivating the main orifice. For normal bounce, air in the primary chamber (20) drives oil through an orifice (69) in a rebound damper valve (65) to the lower piston chamber (54) in order to lift the supported weight of the aircraft as part of the return stroke. However, when riding over a hole, the air acts freely on the differential or net piston area of the gear which area is too small to lift the supported weight of the aircraft, but is large enough to accelerate the unsprung mass of the gear quickly into the hole. An anti-cavitation bypass valve (62) assures oil refill in the lower portion of the piston chamber as the gear extends. Also, a pressure actuated valve (71) may be provided in the metering pin (10) which, upon sensing cavitation in the lower piston chamber (54) during extension, will open a series of holes (72, 73) both above and below the main orifice (15), providing a flow path for oil around the main orifice, to eliminate the aforementioned cavitation. The metering pin is part of this flow path. A check valve (95) may be provided at the top of the metering pin to keep the metering pin full of oil by allowing free flow of oil upward but not allowing downward flow, thus preventing the intake and down flow of shock strut air during the anti-cavitation refill of the lower piston chamber. An extension snubber valve (116) may also be provided to develop piston rebound damping during the last portion of stroke of the landing gear before full extension thereof during take-off.

Fig. 1

## LANDING GEAR MECHANISM FOR USE ON ROUGH RUNWAYS

The present invention relates generally as indicated to a landing gear mechanism which is especially adapted to permit high performance aircraft to operate on relatively rough runways.

Typically landing gears for high performance aircraft such as operated by the military are not designed to operate on rough runways made rough, for example, as a result of temporary repairs to bomb damaged areas and the like. If such an aircraft were to land on a rough runway, considerable damage and possible collapse of the landing gear could be incurred either during landing or as a result of the aircraft rolling over the rough runway surface.

One reason why rough runways are so potentially damaging to the landing gear of high performance military aircraft is that in order for the gear to be effective at heavy take-off weight, the shock strut stroke of the gear during landing may not be adequate to absorb the required amount of landing energy to prevent damage to the gear when landing on rough runways. Also, after the landing energy stroke is complete, high damping loads may take place as the landing gear strut negotiates bumps.

High stresses on the landing gear will also result when the tires fall into holes or depressions in the runway. Moreover, if the gear should extend or compress too quickly, undesirable cavitation may occur during such movement.

According to the present invention, in one aspect there is provided an improved landing gear mechanism which has two low spring rate load ranges, a heavy range for effective operation at heavy take-off weight and a softer range to yield more shock strut stroke for a given range of vertical load during landing. Such a landing gear mechanism substantially reduces or eliminates high damping loads as the landing gear negotiates bumps.

Preferably, such a landing gear mechanism can discriminate between shock strut extension during normal ground roll and extension as the strut tire follows a sudden recess during forward travel. Also, such a landing gear mechanism prevents cavitation in the lower piston chamber of the gear as the gear extends; provides for piston rebound damping as the piston approaches the end of its stroke before full extension; and can readily be incorporated within the envelope of a standard landing gear.

Briefly, the landing gear mechanism in accordance with the invention includes a built-in hydraulic actuator which may be actuated to provide a relatively heavy spring load range during take-off with a heavy take-off weight and a softer spring load range after take-off and prior to landing with a lighter landing weight to yield more shock strut stroke for a given range of vertical load during landing. A metering pin orifice mechanism controls the rate of damping of the gear as it is being compressed while landing is taking place. However, as soon as the landing energy stroke is complete, a taxi instroke bypass valve is permitted to open to allow fluid to pass more freely from the lower piston chamber to the primary piston chamber, bypassing the orifice, to greatly reduce or eliminate high damping loads that might otherwise take place as the gear negotiates bumps. Such valve may automatically be set to quickly close for landing by the action of the gear extension during a subsequent take-off.

Also in accordance with the invention, a rebound damper valve assembly is desirably provided which can discriminate between shock strut extension during normal ground roll and extension as the strut tire follows a sudden recess during forward travel. For normal bounce the landing gear mechanism will force the air to drive oil through an orifice in the rebound damper valve in order to lift the supported weight of the aircraft as part of the return stroke. However, when riding over a hole, the strut air acts freely on the differential or net piston area of the strut (O.D. minus I.D.) which area is too small to lift the supported weight of the aircraft, but is large enough to accelerate the unsprung mass of the landing gear, piston, tire, wheel, etc. quickly into the hole.

Further in accordance with the invention, an anti-cavitation bypass valve is desirably provided to assure oil refill in the lower portion of the piston chamber as the gear extends. The valve is driven open by a spring when the lower piston pressure drops below a predetermined level such as 225 psig (1.551 mPa), which would indicate possible cavitation, and remains open allowing free flow of oil past the main orifice and into the lower piston chamber until the lower piston pressure once again reaches a sufficient pressure to shut the valve off.

Still further in accordance with the invention, a pressure actuated spring return check valve may be provided in the upper end of the metering pin. Such check valve closes at the very start of extension of the strut tire into a recess to keep oil inside the metering pin. During compression of the strut, the check valve opens to allow free flow of oil through the center of the metering pin during such compression.

Also in accordance with the invention, the aforementioned return check valve prevents the unwanted ingestion of shock strut air during the anti-cavitation refill of the lower piston chamber.

Further in accordance with the invention, an extension snubber valve may be provided in an annular chamber between the main piston O.D. and main cylinder I.D. to develop piston rebound damping during the last portion of the stroke of the landing gear before full extension thereof during take-off.

An embodiment of the invention will now be described, by way of an example, with reference to the accompanying drawings, in which:

Figure 1 is an isometric view of one type of landing gear mechanism which has been modified in accordance with the present invention to permit operation on rough runways;

Figure 2 is a fragmentary longitudinal section through such landing gear mechanism shown in the static loaded position;

Figure 3 is a fragmentary longitudinal section through the landing gear mechanism similar to Figure 2 but shown fully extended;

Figure 4 is an enlarged transverse section through the valving at the inboard end of the landing gear mechanism used to service the landing gear mechanism, taken on the plane of the line 4-4 of Figure 2;

Figure 5 is an enlarged fragmentary longitudinal section through the restrictor orifice assembly and taxi instroke bypass valve assembly and rebound flapper valve assembly for such landing gear mechanism, such taxi instroke bypass valve assembly being shown in its inoperative position when the gear is fully extended prior to landing;

Figure 6 is a lower end view of the assembly of Figure 5 as seen from the plane of the line 6-6 thereof;

Figure 7 is an enlarged longitudinal section through one of the bypass passages and check valves of the taxi instroke bypass valve assembly, taken along the plane of the line 7-7 of Figure 6;

Figure 8 is a top end view of the assembly of Figure 5 as seen from the plane of the line 8-8 thereof;

Figure 9 is a fragmentary longitudinal section similar to Figure 5 but showing the taxi instroke bypass valve assembly in its operative position after landing, when the gear is in the static or two inches from the fully extended position;

Figure 10 is a bottom end view of the assembly of Figure 9 as seen from the plane of the line 10-10 thereof;

Figure 11 is a fragmentary longitudinal section through a check valve assembly and relief valve assembly incorporated in the restrictor orifice assembly, taken generally along the plane of the line 11-11 of Figure 10;

Figure 12 is an enlarged fragmentary longitudinal section through the metering pin assembly and anti-cavitation mechanism contained therewithin, such anti-cavitation mechanism being shown in its operative position;

Figures 13 and 14 are transverse sections through the metering pin assembly and anti-cavitation mechanism of Figure 12, taken along the plane of the lines 13-13 and 14-14, respectively;

Figure 15 is an enlarged fragmentary longitudinal section similar to Figure 12 but showing the anti-cavitation mechanism in its operative position;

Figure 16 is an enlarged fragmentary longitudinal section through the rebound damper mechanism of such landing gear mechanism, such rebound damper mechanism being shown in its non-damping mode;

Figure 17 is a fragmentary top plan view of the rebound damper mechanism of Figure 16 as generally seen from the plane of the line 17-17 thereof;

Figure 18 is an enlarged transverse section through the rebound damper mechanism of Figure 17, taken on the plane of the line 18-18 thereof;

Figure 19 is an enlarged fragmentary longitudinal section through the rebound damper mechanism, similar to Figure 16, but showing the rebound damper mechanism in its damping mode near the end of the extension stroke of the gear before full extension thereof;

Figure 20 is a fragmentary top plan view of the rebound damper mechanism shown in Figure 19 as generally seen from the plane of the line 20-20 thereof; and

Figure 21 is a graphical illustration showing how the original air curve of a conventional landing gear mechanism is changed when modified to include an actuator mechanism in accordance with the present invention.

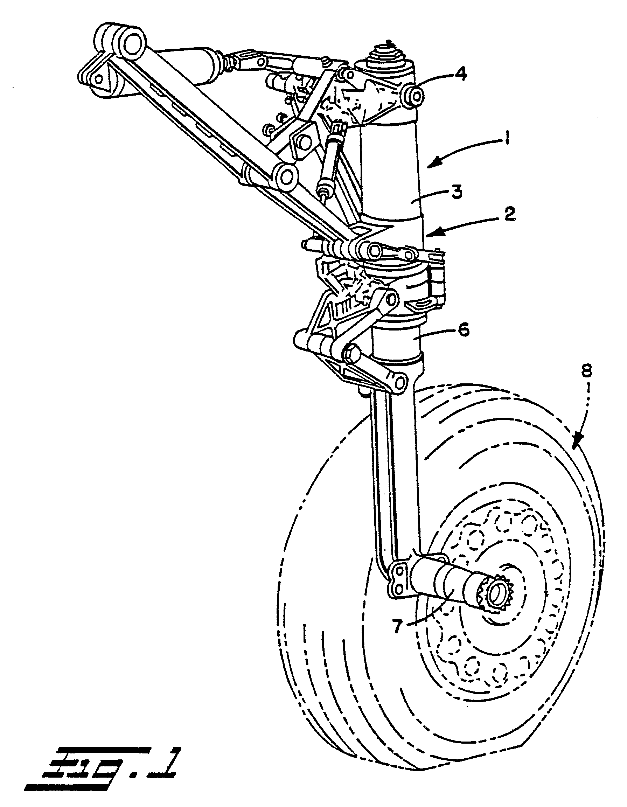

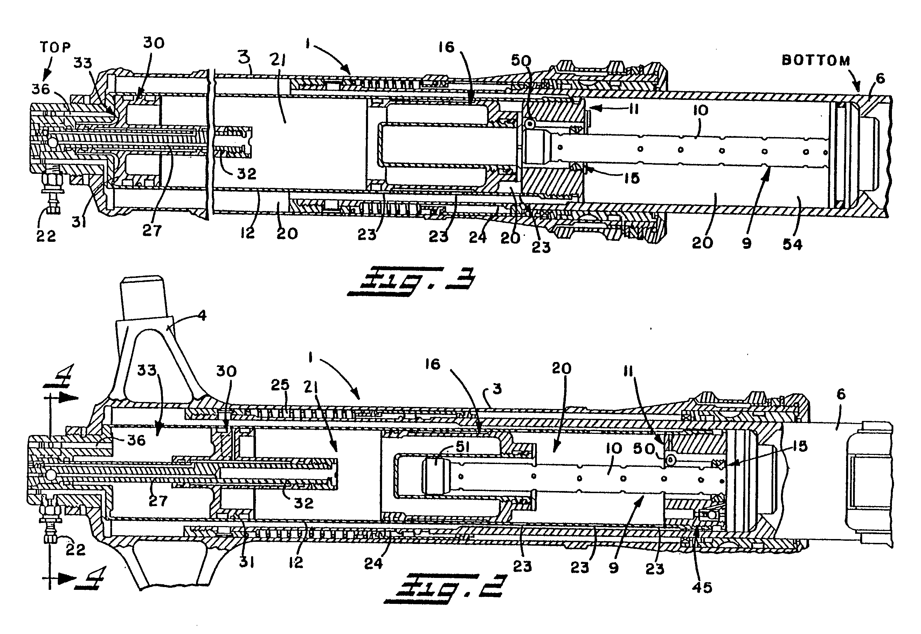

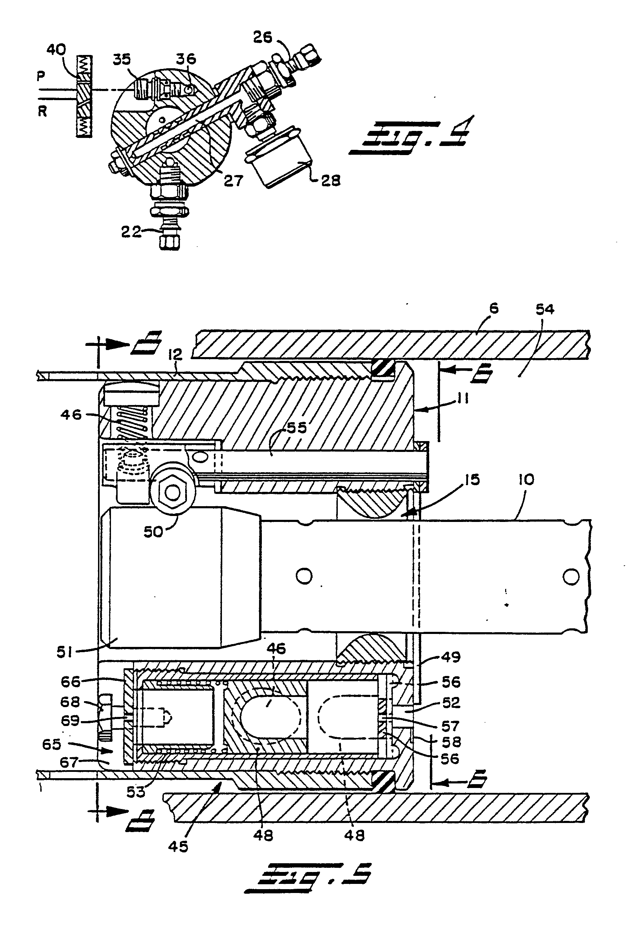

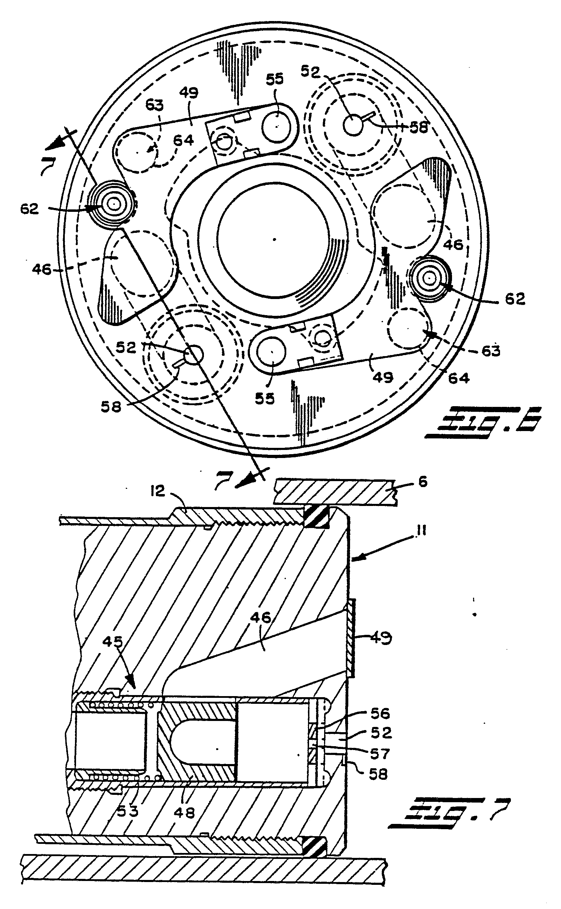

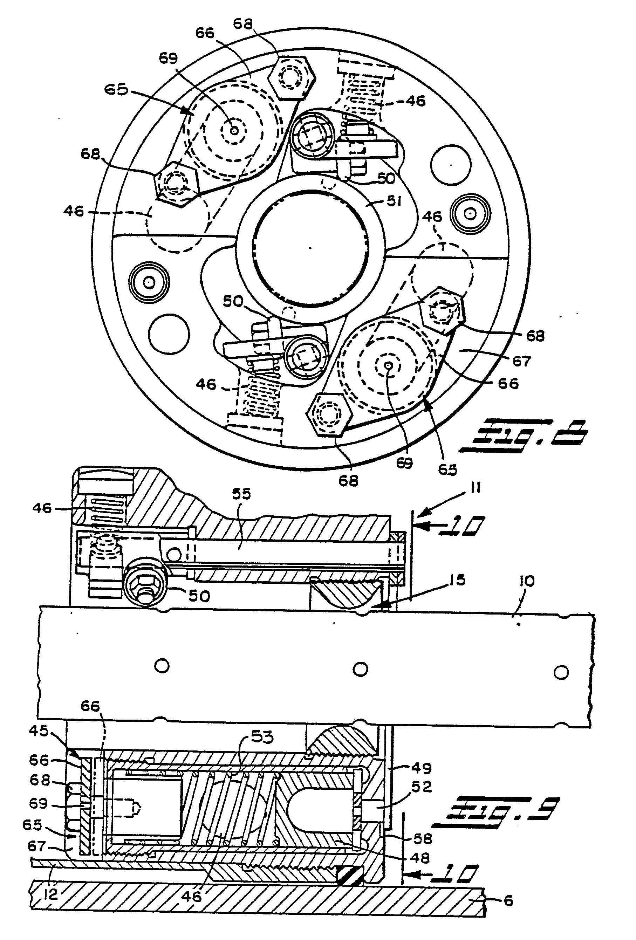

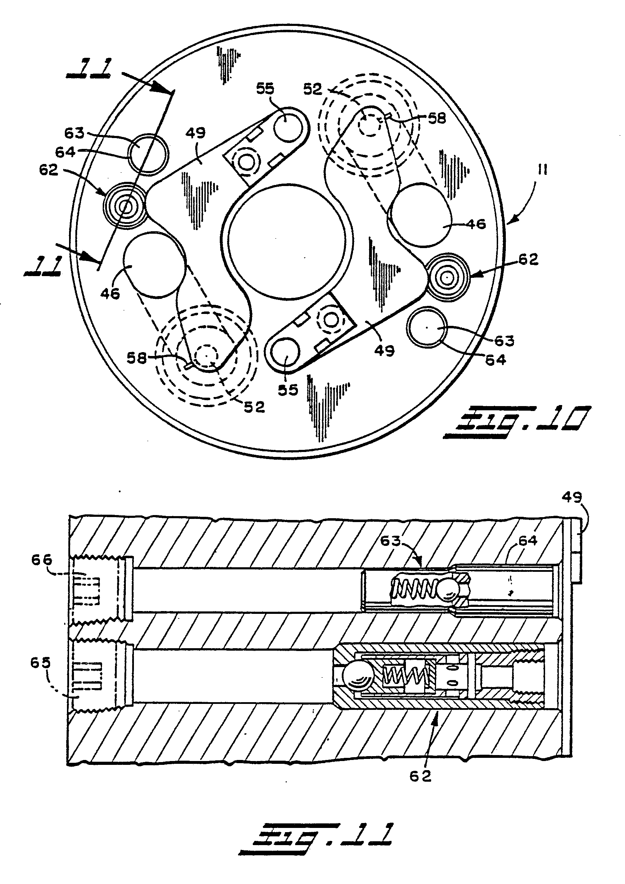

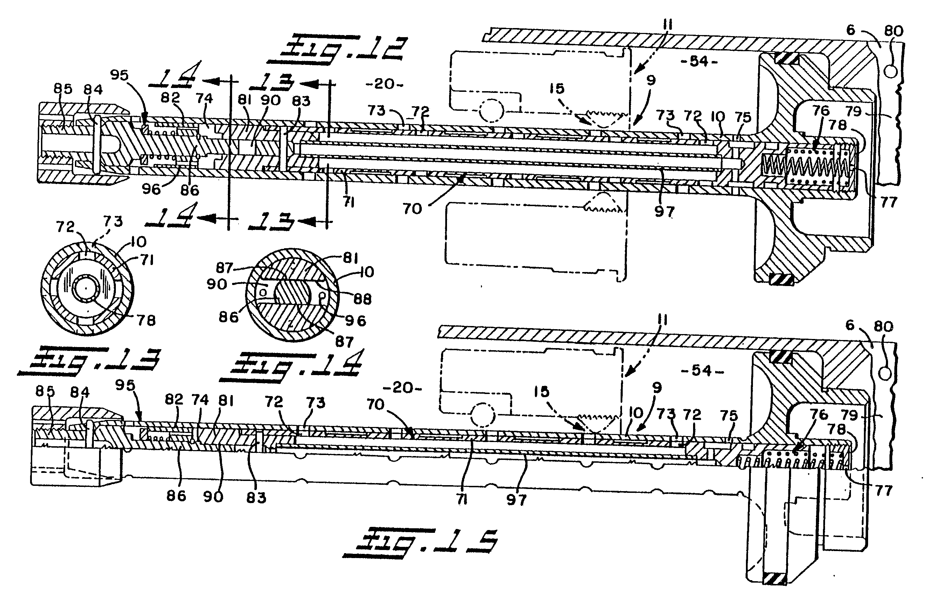

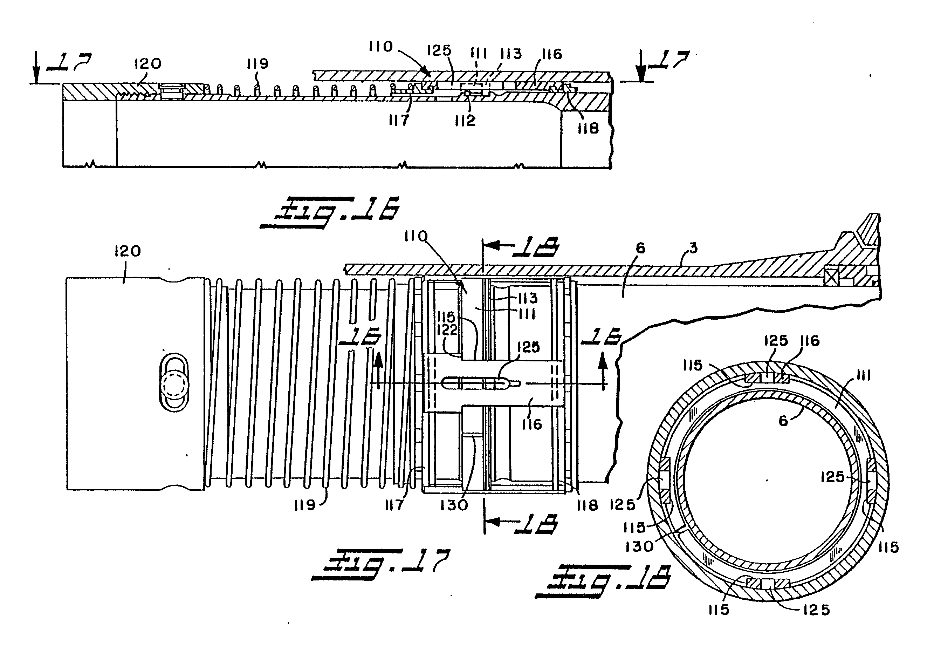

Referring now in detail to the drawings, and initially to Figure 1 thereof, one type of landing gear mechanism which has been modified in accordance with the present invention to permit operation on rough runways is generally indicated by the reference numeral 1. The particular landing gear mechanism shown is the main landing gear used on one type of high performance military aircraft. However, it should be understood that similar modifications could be made to the landing gears for other high performance aircraft as well as transport or other utility types of aircraft.

The landing gear mechanism 1 shown consists of a main shock strut 2 including an outer main cylinder 3 having a trunnion 4 at its upper end for connection to the aircraft fuselage in conventional manner. Suitable support struts and drag brace members are provided for supporting the landing gear in its down position for supporting the aircraft while on the ground and during take-off and landing and for retracting the gear during flight. Axially movable within the cylinder 3 is a main strut piston 6 which extends downwardly and outwardly therefrom and has an axle spindle 7 at the outer end thereof for mounting of a wheel and tire assembly 8 thereon.

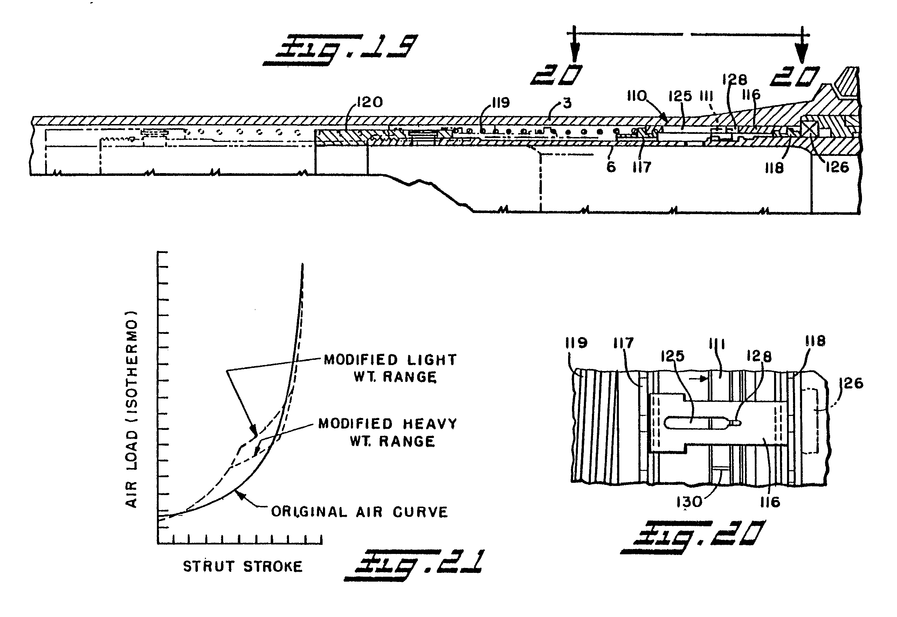

As can readily be seen in Figures 2 and 3, the main piston 6 is generally tubular over its retracted length, and contains a metering pin assembly 9 for controlling the rate of retraction of the main piston during landing of the aircraft. The metering pin assembly 9 is connected to the main piston for movement therewith, and includes a metering pin 10 which extends through a restrictor orifice assembly 11 mounted within the outboard end of an orifice support tube 12. The orifice support tube is in turn connected at its inboard end to the main cylinder 3 and extends into the main piston 6 over a substantial portion of the length of the main cylinder. By controlling the taper of the metering pin 10 in relation to the size of an orifice 15 in the restrictor orifice assembly 11 through which the metering pin assembly extends, the dynamic load stroke curve of the landing gear can be controlled within certain limits at different strut-stroke positions, as well known in the art.

Also, it is known to provide a secondary piston 16 intermediate the ends of the orifice support tube 12 to divide the orifice support tube into a primary chamber 20 and a secondary chamber 21 to permit further refinements to the load stroke air curve of the landing gear.

Typically, to service the gear, the main cylinder 3 is first filled with oil to the desired level through a primary service valve 22 at the inboard end of the main cylinder (see Figures 2-4). Then the primary chamber 20 is charged with air through the same valve 22 until the air pressure within the primary chamber reaches a predetermined level, for example, 700 psi., 4.826 mPa. Suitable openings 23, 24 may be provided in the orifice support tube 12 and main piston 6 for passage of oil and air into the primary chamber 20 and fluid chamber 25 between the main cylinder 3 and main piston 6. Next the secondary chamber 21 is charged with air through a secondary service valve 26 and associated passage 27 until the gear is extended to the desired length. A gauge assembly 28 may be connected to the passage 27 as shown in Figure 4 for measuring the air pressure in the secondary chamber.

The amount of secondary air required to achieve the desired extension of the gear will vary depending upon the weight of the aircraft prior to take-off. In the usual case, the take-off weight of a military aircraft is substantially greater than its landing weight. Indeed, the landing gears for most high performance military aircraft are not designed to support the landing weight of the aircraft when fully loaded. Accordingly, it is common practice for high performance military aircraft to dump unused stores and/or any excess fuel prior to landing.

Heretofore, it has only been possible to adjust the load setting of the landing gear during servicing while the aircraft is on the ground by controlling the amount of oil and air that is put into the main cylinder and primary and secondary chambers during servicing. Since the optimum load setting for the gear for a heavy take-off weight is different than the optimum load setting for a lighter landing weight, standard practice has been to compromise the load setting somewhere between the optimums for take-off and landing.

However, it has been found that if the gear is provided with a hydraulic actuator 30 in accordance with the present invention. the gear can be made to accommodate two or more different aircraft weights so that the gear is effective at both a heavy take-off weight and at a lighter landing weight. As can be seen in Figures 2 and 3, such hydraulic actuator is desirably built into the landing gear and comprises a hydraulic piston 31 axially movable within the orifice support tube 12 intermediate the inboard end thereof and the secondary piston 16. The hydraulic piston is desirably supported for axial movement within the orifice support tube by a piston stem 32 which extends axially into the orifice support tube from the outboard end thereof. The outboard side of the hydraulic piston is exposed to the secondary air in the secondary chamber 21. whereas the inboard side of the hydraulic piston and inboard end of the orifice support tube define therebetween a hydraulic chamber 33 for hydraulic oil. As will be apparent from the discussion which follows, such a built-in hydraulic actuator may be effectively utilized to provide two or more static system stroke ranges for the gear. one stroke range based on the take-off weight, and one or more different stroke ranges based on the landing weight. Figure 21 shows the resulting effect on the load stroke curve of the landing gear mechanism when modified to include the actuator mechanism of the present invention, wherein the heavy weight and light weight static positions of the modified landing gear mechanism are clearly defined.

Servicing of a gear including such a built-in hydraulic actuator 30 is conventional except that the hydraulic chamber 33 is also charged with hydraulic oil through a hydraulic chamber connection 35 and associated passage 36 in the inboard end of the main cylinder 3 during servicing. This initial servicing establishes the heavy load setting (static loaded position) of the gear shown in Figure 2 prior to take-off. After take-off, with the gear fully extended, all or a portion of the hydraulic oil can be exhausted from the hydraulic chamber 33 as shown in Figure 3 to establish a lighter load setting for the gear as by shuttling a valve 40 connected to the hydraulic chamber connection 35 (see Figure 4) which causes the hydraulic piston 31 to move to the left as shown in Figure 3. This lighter load setting of the gear may be manually controlled or automatic in the sense that after a suitable time delay or when the pilot pushes the gear lever to the down position (after take-off and just prior to landing) the valving 40 may be automatically moved to a position communicating the hydraulic chamber 33 with a reservoir to permit the hydraulic piston 31 to move to the left to the lighter load position as aforesaid in preparation for landing, possibly with a pilot override if necessary. Also, a suitable feed-back mechanism (not shown) may be employed to locate the hydraulic piston 31 at additional intermediate positions, allowing the pilot to dial in any intermediate setting, in order to obtain any number of different static weight conditions, instead of merely two such positions as shown in Figure 21. Changing the location of the hydraulic piston 31 within the gear permits optimization of the air curve or spring rate of the gear for both heavy take-off weights and lighter landing weights.

Another objection to conventional landing gears for high performance military aircraft is that if the aircraft were required to operate on tough runways, the damping loads that occur as the gear negotiates bumps might be much higher than desired, and could cause structural damage and possible collapse of the gear. A gear when modified according to the present invention, however, will greatly reduce or substantially eliminate such high damping loads, thus making operation of the gear possible on rough runways. Briefly, this is accomplished by providing the gear with a taxi instroke bypass valve assembly 45, shown in Figures 2 and 5-11, which opens one or more bypass passages 46 around the orifice 15 between the metering pin 10 and restrictor orifice assembly 11 as soon as pressure equilibrium is obtained within the gear after landing to permit sudden compression of the gear for faster, lesser damped, instroke as necessitated by the gear going over such bumps.

As can be seen in Figures 5-11, the taxi instroke bypass valve assembly 45 is desirably incorporated within the restrictor orifice assembly 11 and consists of one or more two-position pressure actuated valves 48 and rotary valve vanes 49. In the preferred form of the invention shown herein, there are two such valves 48 and associated rotary valve vanes 49 located at the lower end of the support tube 12, each spaced 180° apart.

When the gear is fully extended prior to landing as shown in Figure 3, the rotary valve vanes 49 are mechanically actuated by engagement of respective rollers 50 with a ramp 51 on the upper or inboard end of the metering pin 10 to close the bypass passages 46 and open the ports 52 to the valves 48 exposing the valves to the hydraulic oil in the lower chamber 54 of the main piston 6. This causes the valves 48 to move inwardly against the bias of valve springs 53 to the position shown in solid lines in Figures 5 and 7 also blocking fluid flow through the bypass passages 46. Accordingly, during landing, all of the hydraulic fluid must pass from the lower piston chamber 54 up to the primary chamber 20 through the landing energy orifice 15, giving full orifice landing dynamics to the gear during landing.

The rollers 50 are connected to respective shafts 55 in radially offset relation from their respective axial centers, whereby when the rollers 50 engage the ramp 51, the shafts are caused to rotate, thus rotating the rotary vanes 49 which are attached to the outboard ends thereof to the position shown in Figures 5-7 closing the bypass passages 46 and opening the valve ports 52 as aforesaid.

A restrictor plate 56 may be provided in each valve port 52 to cause a short time delay in moving the valves 48 to the Figures 5 and 7 position blocking fluid flow through the bypass passages 46 after the valve ports have been opened. As shown in phantom lines in Figure 5, when the valves 48 and restrictor plates 56 are fully seated against the inner ends of the valve ports 52, the area of the restrictor plates 56 exposed to the fluid pressure in the valve ports is not sufficient to overcome the bias of the valve springs 53 and fluid pressure acting on the valves 48 opposing such movement. Not until sufficient hydraulic fluid passes through a central orifice 57 in each of the restrictor plates 56 to act on the larger surface area of the associated pressure actuated valve 48 will the valves 48 begin to move to the solid line position shown in Figures 5 and 7. As soon as the valves 48 commence such movement, the restrictor plates 56 will also move away from the valve ports 52 to allow fluid pressure to act on the entire exposed area of the restrictor plates and valves 48 thus requiring less fluid pressure to maintain the valves in such solid line position.

After landing, when the gear is in the static or two inches (51 mm) from the fully extended position shown in Figure 3, the ramp 51 moves axially out of engagement with the trigger rollers 50, whereby the rollers are caused to move into engagement with the O.D. of the metering pin 10 due to the force of axial compression springs 46 acting on the rollers, which causes the shafts 55 connected thereto to rotate the rotary valve vane 49 to move to the position shown in Figures 9 and 10 to open the bypass passages 46 and close the valve ports 52. The valve springs 53 then cause the valves 48 to move toward the valve ports 52 to open the bypass passages 46 as soon as pressure equilibrium is obtained on opposite sides of the valves after landing. One or more radial slots 58 extend radially outwardly from the valve ports 52 beyond the rotary valve vanes 49 when the rotary valve vanes are in the position shown in Figures 9 and 10 closing the valve ports 52 to allow for restricted flow of excess hydraulic oil from the valve ports during such outward movement of the valves.

When the bypass passages 46 are open, the bypass passages allow more oil to flow around the metering orifice 15 for sudden compression of the gear to reduce the restriction instroke while taxiing on rough fields, for faster instroke of the gear if necessary.

During take-off, as the gear approaches its fully extended position (i.e. within approximately two inches (51 mm) from its fully extended position) the ramp 51 located at the upper end of the metering pin 10 engages the trigger rollers 50 which causes the shafts 55 connected thereto to rotate the rotary valve vanes 49 to close the bypass passages 46 and open the valve ports 52 so that the valves 48 will also move to close the bypass passages. Thus, once again the bypass passages are shut when the gear is fully extended to give full orifice landing dynamics to the gear as aforesaid.

A rebound flapper valve assembly 65 Figure 5 may also optionally be provided at the inner end of each bypass passage 46 on the upper end of the restrictor orifice assembly 11 opposite the rotary vane valves 49. Each rebound flapper valve assembly desirably consists of a flat flapper valve plate 66 attached to the upper end of the restrictor orifice assembly housing 67 as by means of a pair of shoulder bolts 68 which permit limited movement of the valve plates between the closed position shown in Figure 5 and the open position shown in Figure 9. Such limited movement of the flapper valve plates 66 permits the valve plates to be pushed to the open position shown in Figure 9 during instroke movements of the gear while taxiing, whereby the valve plates are effectively removed during the instroke so that there is no damping caused by the rebound flapper valves during such instroke. However, the rebound flapper valves will dampen the outstroke of a weighted gear for normal bounce during taxiing, in that the return flow rate through the bypass passages 46 causes a suction which closes the flapper valve plates against the passages as shown in phantom lines in Figure 9, thus requiring the air pressure in the primary chamber 20 to drive the oil through a restricted flow passage consisting of a small hole 69 in the center of the flapper valves in order to lift the supported weight of the aircraft as part of the return stroke.

At the same time, if the wheel and tire assembly 8 should ride over a hole, the pressurized air in the primary chamber 20 can still act freely on the net exposed area of the main piston 6 between the main cylinder 3 and orifice support tube 12 (O.D. minus I.D.) to accelerate the unsprung mass of the gear quickly into the hole. The area of the piston 6 exposed to such air in the primary chamber is too small to lift the supported weight of the aircraft but is easily large enough to accelerate the unsprung mass quickly into the hole as aforesaid.

One or more check valves 62 may optionally be provided in the restrictor orifice assembly 11 to supplement the oil flow from the primary chamber 20 to the lower piston chamber 54 during the outstroke of the gear if needed. Also one or more overload relief valves 63 may optionally be provided in the restrictor orifice assembly to relieve excess oil pressure from the lower piston chamber to the primary chamber in the event that an overpressure condition should develop during the taxi mode when the gear is being compressed. During the landing mode, the passages 64 leading to the overload relief valves 63 are closed by the rotary valve vanes 49 as shown in Figure 6 to ensure that the overload relief valves will not operate during the landing mode. Suitable plugs 65, 66, shown in phantom lines in Figure 11, may be inserted into the passages for either or both of the check valves 62 and relief valves 63 to make them completely inactive if desired.

Referring next to Figures 12-14, an anti-cavitation mechanism 70 is also desirably incorporated into the metering pin assembly 9 to assure oil refill in the lower piston chamber 54 during sudden extension of the gear caused by the air pressure in the primary chamber 20 acting on the exposed main piston area 6 between the main cylinder 3 and orifice support tube 12 (see Figures 2 and 3) as the wheel and tire assembly 8 negotiates a dip or depression. The anti-cavitation mechanism shown comprises a bypass sleeve valve 71 axially movable within the metering pin 10. The bypass sleeve valve has a series of longitudinally spaced holes 72 therein which when brought into alignment with equally spaced holes 73 in the metering pin 10 allow for the flow of oil through the internal sleeve valve 71 around the metering orifice 15 to supplement the oil flow therethrough. However, as long as the internal piston pressure within the lower piston chamber 54 is above a predetermined level, for example, 225 psig, the pressure acting on the differential area of the internal sleeve valve 71 through a pressure sensing orifice 75 in the metering pin will overcome the bias of a spring 76 acting on the lower end of the sleeve valve to move the sleeve valve to the position shown in Figures 12 and 13 in which the holes 72 therein are out of alignment with the holes 73 in the metering pin, thus blocking such holes.

The pressure sensing orifice 75 is connected to a chamber 74 adjacent the upper (left) end of the internal sleeve valve 71 via a hollow tube 97 therein extending substantially the entire length of such bypass sleeve valve. When the internal piston pressure in the chamber 54 below the metering orifice 15 drops below such predetermined gauge pressure, the pressure in chamber 74 correspondingly drops, whereby the pressure acting on the entire sleeve assembly can no longer keep the spring 76 compressed. Accordingly, the entire sleeve assembly is moved upwardly by the spring 76 to bring the bypass holes 72 in the internal sleeve valve 71 into alignment with the bypass holes 73 in the metering pin 10 as shown in Figure 15 to supplement the oil flow through the orifice 15 to prevent cavitation in the chamber 54 during extension of the gear. As the pressure in the chamber 54 builds up (above 225 psig), once again the pressure in the chamber 74 acting on the entire sleeve assembly will overcome the force of the spring 76 to close off the bypass holes 73 in the metering pin 10. The lower end of the sleeve valve is exposed to the atmosphere through a slot 77 in a spring retainer 78 and a surrounding manifold assembly 79 in the main piston which has one or more vent passages 80 therein.

Axial upward movement of the bypass sleeve valve 71 is limited by engagement of a bushing 81 on the upper end of the sleeve valve with a stop 82 within the metering pin 10. When the bushing 81 is urged into engagement with the stop 82 by the spring 76 (a movement of approximately 1/4 inch), the holes 72, 73 will be in axial alignment with each other as shown in Figure 15 as aforesaid. Circumferential alignment of the holes 72, 73 is maintained as by providing a pin connection 83 between the bypass sleeve valve 71 and bushing 81 and another pin connection 84 between the metering pin 10 and a shaft member 85. The shaft member 85 has an extension 86 thereon with flats 87 on opposite sides thereof in sliding engagement with the opposite sides 88 of a slot 90 in the bushing 81 (see Figure 14).

A pressure actuated spring return check valve 95 is also desirably located at the upper end of the metering pin 10. During compression of the gear, the check valve 95 is open as shown in Figure 12 thus allowing free flow of oil inward through the center of the metering pin via longitudinal passages 96 in the stop 82 and the slot 90 in the bushing 81 around the sides of the extension 86, such oil having come inward through the hollow tube 97 extending through the bypass sleeve valve 71 and communicating with the pressure sensing orifice 75 at the lower end thereof. However, whenever the gear (wheel and tire assembly) starts to extend into a recess or the like, the pressure above the orifice 15 is higher than the lower chamber 54 pressure. Accordingly, the check valve 95 immediately closes as shown in Figure 15 to keep oil inside the metering pin and prevent trapped gas vapors from leaving the cavity immediately above the metering pin during sudden outstroke of the piston. Thus, such check valve prevents the unwanted ingestion of shock strut air during the anti-cavitation refill of the lower piston chamber.

A rebound damper mechanism 110 (shown generally in Figures 2 and 3 and in greater detail in Figures 16-20) may be provided in the annular chamber 25 between the O.D. of the main piston 6 and the I.D. of the main cylinder 3 which operates on sudden free extension of the gear during takeoff to slow the extension of the gear to reduce shock as the gear reaches its fully extended position. Such rebound damper mechanism desirably consists of a retaining ring 111 suitably attached to the O.D. of the main piston 3 for movement therewith as by means of a lock ring 112 and recoil valve ring 113.

The retaining ring 111 has a plurality of circumferentially spaced longitudinal grooves 115 in the outer surface thereof. Preferably there are four such grooves equally spaced around the periphery of the retaining ring as shown in Figure 17. Within each groove is a snubber plate 116 supported at its opposite ends as by upper and lower snubber rings 117, 118 which permit limited sliding movement of the snubber plates 116 relative to the main piston 6 and retaining ring 111 attached thereto. Each of the snubber plates has a pair of stop shoulders 118 upwardly of the retaining ring 111 which are normally biased into engagement with the retaining ring by a spring 119 interposed between the piston head 120 and the upper snubber ring 117 as shown in Figures 16 and 17. When in such position, the snubber plates 116 permit free flow of oil from one side of the retaining ring 111 to the other through longitudinally extending slots 125 in the snubber plates which have a length greater than the grooves 115 in the retaining ring as clearly shown in Figure 17.

However, during the last part of the extension stroke of the gear before full extension thereof, the lower snubber ring 118 engages a bearing 126 adjacent the outboard end of the main cylinder 3 as shown in Figures 19 and 20 thus preventing continued extension of the snubber plates 116 with the main piston 6 and retaining ring 111. Continued movement of the retaining ring relative to the snubber plates results in the substantial closing off of the oil flow slots 125 in the snubber plates at the lower ends thereof by the retaining ring thus to restrict flow therethrough. which slows extension of the gear to reduce the shock on the gear as the gear reaches the fully extended position. The slots 125 in the snubber plates may have narrow extensions 128 at the lower ends thereof which still remain open when the major width of the slots 125 is closed by the retaining ring as best seen in Figure 20 to provide for continued restricted flow past the retaining ring. Alternatively, the retaining ring itself may contain a separate restricted orifice 130 through which the oil may still pass after the flow slots 125 in the snubber plates are substantially closed.

Although the invention has been shown and described with respect to a certain preferred and illustrated embodiment, it is probable that equivalent alterations and modifications will occur to others skilled in the art upon the reading and understanding of the specification. The present invention is considered to include all such equivalent alterations and modifications.

## Claims

1. A landing gear mechanism comprising a main cylinder (3), a main strut piston (6) axially movable within said main cylinder (3), means (11) for controlling the rate of instroke of said main strut piston (6) within said main cylinder (3) comprising restrictor means (11) defining with the outboard end of said main strut piston (6) a lower piston chamber (54) therebetween, said restrictor means (11) having a restricted flow passage (15) therethrough for controlling the rate of flow of hydraulic fluid between said lower piston chamber (54) and the opposite side of said restrictor means (11), and means (46) for providing a bypass flow path for hydraulic fluid from said lower piston chamber (54) to the opposite side of said restrictor means (11) whenever said landing gear mechanism engages a bump during taxiing to reduce the damping loads that would otherwise occur if all such hydraulic fluid were required to pass through said restricted flow passage (15), said means for providing a bypass flow path comprising a bypass passage (46) around said restricted flow passage (15), and means (49) for opening said bypass passage (46) as soon as pressure equilibrium is established within said landing gear mechanism on opposite sides of said restricted flow passage (15) after landing to permit sudden compression of said landing gear mechanism for faster instroke as necessitated by said landing gear mechanism going over bumps and the like, characterized in that said means for opening said bypass passage (46) comprises a rotary valve vane (49) movable between a first position closing said bypass passage (46) and a second position opening said bypass passage (46), and means for moving said rotary valve vane (49) from said first position to said second position after said landing gear mechanism has been partially compressed after landing.

2. The landing gear mechanism of claim 1 further characterized in that said restrictor means (11) has an opening therethrough, and a metering pin (10) is attached to said main strut piston (6) for movement therewith and extends through said opening to define said restricted flow passage (15), and said means for moving said rotary valve vane (49) comprises a ramp (51) on said metering pin (10), and roller means (50) operatively connected to said rotary valve vane (49), said roller means (50) being engageable with said ramp (51) when said landing gear mechanism is fully extended to move said rotary valve vane (49) to said first position closing said bypass passage (46) and being disengageable from said ramp (51) after landing has taken place to move said rotary valve vane (49) to said second position opening said bypass passage (46).

3. The landing gear mechanism of claim 1 further characterized by a pressure actuated valve means (48) for blocking fluid flow through said bypass passage (46) when said landing gear mechanism is fully extended and for permitting fluid flow through said bypass passage (46) after landing has taken place.

4. The landing gear mechanism of claim 3 further characterized by spring means (53) for urging said pressure actuated valve means (48) out of the path of said bypass passages (46), said pressure actuated valve means (48) having a valve port (52) which when open to the hydraulic fluid in said lower piston chamber (54) during landing causes said pressure actuated valve means (48) to move into the path of said bypass passage (46) in opposition to said spring means (53), said rotary valve vane (49) when moved between said first and second positions also respectively opening and closing said valve port (52) to the hydraulic fluid in said lower piston chamber (54).

5. The landing gear mechanism of claim 4 further characterized by a radial slot (58) extending radially outwardly from said valve port (52) beyond said rotary valve vane (49) when in said second position closing said valve port (52) to permit restricted flow of hydraulic fluid from said valve port (52) to said lower piston chamber (54) after such pressure equilibrium has been established to permit movement of said pressure actuated valve means (48) out of the path of said bypass passage (46).

6. The landing gear mechanism of claim 5 further characterized in that said bypass passage (46) and pressure actuated valve means (48) are contained within said restrictor means (11).

7. The landing gear mechanism of claim 4 further characterized by restrictor means (56) in said valve port (52) for causing delayed movement of said pressure actuated valve means (48) into the path of said bypass passage (46) after said valve port (52) has been opened by movement of said rotary valve vane (49) to said first position.

8. The landing gear mechanism of claim 1 further characterized by a rebound flapper valve (65) at the end of said bypass passage (46) opposite said lower piston chamber (54), said rebound flapper valve (65) being movable away from said bypass passage (46) to permit unrestricted flow through said bypass passage (46) during instroke movements of said landing gear mechanism while taxiing, and being movable towards said bypass passage (46) to restrict the flow through said bypass passage (46) during outstroke movements of said landing gear mechanism while taxiing to dampen the outstroke of said landing gear mechanism when weighted for normal bounce during taxiing.

9. The landing gear mechanism of claim 8 further characterized in that said rebound flapper valve (65) when moved towards said bypass passage still provides a restricted flow passage (69) to said bypass passage (46).

10. The landing gear mechanism of claim 1 further characterized by overload relief valve means (63) for relieving excess pressure from said lower piston chamber (54) in the event that an overpressure condition should develop during instroke movements of said landing gear mechanism while taxiing, and means (49) for blocking communication between said overload relief valve means (63) and said lower piston chamber (54) during landing.

Fig.1

TOP          30          1      16        50                    BOTTOM
33                    3  21              50            11    10        6
36                                                                    11
                                                              15
22  31  27  12  20  23  23  24  20  23              20  9  54

_Fig. 3_

4
33  30      1    16    20    11                    6
25  21          3                              15
36                        51              10  50
27  32                                    45
22  31  12  24            23  23  9  23

_Fig. 2_

EP 0 298 579 A2

Fig. 4

Fig. 5

Fig.6

Fig.7

Fig. 8

Fig. 9

Fig.10

Fig.11

Fig.12

Fig.13

Fig.14

Fig.15

_Fig.16_

_Fig.17_

_Fig.18_

EP 0 298 579 A2

EP 0 298 579 A2

Fig. 19

Fig. 20

Fig. 21

AIR LOAD (ISOTHERMO)

STRUT STROKE

MODIFIED LIGHT WT. RANGE

MODIFIED HEAVY WT. RANGE

ORIGINAL AIR CURVE